# EUROPEAN PATENT SPECIFICATION

(11) **EP 0 830 812 B1**
(45) Date of publication and mention of the grant of the patent: **20.08.2003**
(21) Application number: 97304633.7
(22) Date of filing: 27.06.1997
(51) Int. Cl.: A01K 93/00, A01K 91/03

(54) **Improvements in floats and depth finders**
Verbesserung an Angelposen und Tiefenpeiler
Perfectionnement pour flotteur et détecteur de profondeur

(30) Priority: 27.06.1996 GB 9613584
(43) Date of publication of application: 25.03.1998
(73) Proprietor: Harmon, William James, Grimsby, North East Lincolnshire DN32 9ST (GB)
(72) Inventor: Harmon, William James, Grimsby, North East Lincolnshire DN32 9ST (GB)
(74) Representative: Loven, Keith James

(56) References cited:
- FR-A- 793 379
- GB-A- 767 743
- US-A- 2 125 718
- US-A- 2 127 667
- US-A- 2 720 720
- US-A- 3 866 346

## Description

### Field of the Invention

This invention relates to fishing floats and depth finders, and in particular to a means for attaching fishing floats and depth finders to fishing line.

### Background to the invention

When fishing with rod and line, and particularly when coarse fishing, it is often necessary to attach a float to the line. The float may serve as a bite indicator or to enable the depth of the water being fished to be plumbed. Floats of the prior art require the line to be threaded through an eyelet or a part of the float, e.g. the body thereof. This requires any other tackle, such as split shot or hooks for example, to be removed before the float can be attached to the line. Obviously this takes time, and furthermore, in cold weather is a difficult task.

One type of known depth finding float is disclosed in US 4 845 884. In this case the line Is threaded through the body of the float, and when the rod is lifted friction between the line and the body of the float causes the float to lock in position, thereby indicating the depth of the water being fished. When the line is not taut, there is little friction between the line and the float, and therefore the float can slide along the line.

Another type of depth finding float is known from EP 0 119 074. Line is threaded through an eyelet on the bottom of the float, around the body of the float, and subsequently through an eyelet on the top of the float. The float utilises the same principle as US 4 845 884 to hold the float on the line when the rod is lifted, and to permit the float to slide with respect to the line when the line is slack.

It would be particularly desirable to be able to attach a float to a line without it being necessary to remove other items of fishing tackle.

Furthermore, it would be desirable to be able to attach an object to a flexible line, such as a rope or a wire stropp for example, without it being necessary to remove other objects attached to the flexible element.

### SUMMARY OF THE INVENTION

The invention provides a device for attachment to a flexible line comprising a body and a retaining member, the device being provided with means to permit the introduction of a loop of the said flexible line into the body so that the loop extends around the said retaining member and the ends of the loop pass out of the body, wherein when the device is attached to a flexible line and the said line is slack, the device may slide therealong, but when the said line is taut friction between the device and the flexible line arrests movement of the device therealong.

The retaining member and the body is mounted to provide for relative sliding movement therebetween.

The retaining member may be slidably mounted within the body, or the body may be slidably mounted on the retaining member, to provide a first position In which the flexible line may be passed into or out of the body, and a second position In which the body and retaining member co-operate to retain the flexible line in the body.

Advantageously, means to hold the device in the first and/or second position may be provided. This may be achieved by biasing the retaining member into the second position.

In one embodiment of the invention, the retaining member is mounted co-axially within the body.

The means to permit a loop of flexible line to be introduced into the body may comprise a bore, which may be a through bore. Preferably, the axis of the bore extends substantially in the radial direction of the body. The retaining member is preferably slidably mounted within the body so that the retaining member may pass through the said bore into the second position.

Advantageously, means to move the retaining member or the body between the first and second positions is provided. The said means may comprise a protrusion attached and/or extending from the retaining member or the body. Where the said member is attached to the retaining member, the body may be provided with a slot through which the protrusion passes. The protrusion may be a pin or a peg. The protrusion may co-operate with a collar so shaped as to fit around the body.

The retaining member may be substantially circular or rectangular in cross-section.

One end of the retaining member may be adapted to co-operate with the body, and preferably such adaptation takes the form of chamfering the retaining member.

In one embodiment of the invention, the retaining member or the body is provided with a slot through which a part of the loop of elongate line may pass. The slot may be cut in the retaining member or the body In the axial or radial direction thereof, or at any angle therebetween.

Preferably, the retaining member is a rod or pin. The rod or pin may comprise upper and lower portions attachable one to another, the lower portion being chosen from a plurality of lower portions each of different diameter and/or length. The upper and lower portions may be releasably attachable one to another by suitable attachment means, such as threads, or by the provision of a push fit between the upper and lower portions. One of the upper and lower portions is preferably provided with a plurality of bores having diameters to enable lower portions of different diameters to be attached to the upper portion.

In one embodiment of the invention, the flexible line is fishing line.

Preferably, the body is formed from a suitable plastics material, and the body may be formed as a plastics moulding.

In one embodiment of the invention, the body is metal, which may be a lightweight alloy such as aluminium.

The invention further provides a fishing float comprising a device for attachment to a fishing line comprising a body and a retaining member, the device being provided with means to permit the introduction of a loop of the said fishing line into the body so that the loop extends around the said retaining member and the ends of the loop pass out of the body, wherein when the float is attached to the fishing line and the said line Is slack, the device may slide therealong, but when the said line is taut friction between the device and the flexible line arrests movement of the device therealong.

The float of the invention may further comprise a thermometer.

The invention further provides a depth finder comprising a device for attachment to a fishing line comprising a body and a retaining member, the device being provided with means to permit the introduction of a loop of the said fishing line Into the body so that the loop extends around the said retaining member and the ends of the loop pass out of the body, wherein when the depth finder is attached to the fishing line and the said line is slack, the device may slide therealong, but when the said line is taut friction between the device and the flexible line arrests movement of the device therealong.

The depth finder of the invention may further comprise a thermometer.

The device of the invention provides a particularly simple device for attachment to flexible lines, such as fishing line. The device is very simple to operate. With the device in position 1, the user simply takes a length of flexible line, forming an open loop therein, and passes it into the body. The retaining means is then moved with respect to the body, or vice versa, into the second position so that the line passes around the retaining means. When the flexible line Is slack, the device may slide along the line, or the line may slide through the device. However, If the line is taut, friction between the line, the body and the retaining member arrest movement of the body on the line.

Another advantage of the device of the Invention, particularly when used to attach a fishing float or depth finder to a fishing line, Is that a number of different floats and/or depth finders may be provided, each being adapted to fit to a device of the invention.

### Brief Description of the Drawings

In the drawings, which illustrate exemplary embodiments of the invention:
Figure 1 shows front and rear elevations of an attachment device according to the invention;
Figure 2 shows front and rear elevations of another attachment device according to the invention;
Figure 3 shows front and side elevations of another attachment device according to the invention;
Figure 4 shows a front elevation of another attachment device according to the invention and an exploded view of the same;
Figure 5 shows front and side elevations of another attachment device according to the invention;
Figure 6 is a schematic representation of a depth finder according to the invention;
Figure 7 is a detailed view of the depth finder shown in Figure 6 in a line receiving position;
Figure 8 is a detailed view of the depth finder shown in Figure 6 in a line retaining position;
Figure 9 is a partial cross-section of the depth finder shown in Figure 8;
Figure 10 is a schematic representation of another depth finder according to the invention;
Figure 11 is a detailed view of the depth finder shown in Figure 10 in a line receiving position;
Figure 12 is a detailed view of the depth finder shown in Figure 10 in a line retaining position;
Figure 13 is side view of the depth finder as shown in Figure 12;
Figure 14 is a partial cross-section of the depth finder shown in Figure 12;
Figure 15 is a depth finder according to another embodiment of the invention;
Figure 16 is an exploded view of an attachment device according to another embodiment of the invention;
Figure 17 is an exploded view showing components for a pole float/depth-finder according to the invention;
Figure 18 shows cross-sectional and front views of a float/depth-finder according to the invention;
Figure 19 is a side view of the device shown in Figure 18;
Figure 20 shows front and side views of a pole float according to another embodiment of the invention;
Figure 21 is a waggler float according to the Invention;
Figure 22 shows front views, in partial cross-section, of another attachment device according to the invention; and
Figure 23 shows front views of a waggler float/depth-finder according to the invention.

### Detailed Description of the Preferred Embodiments

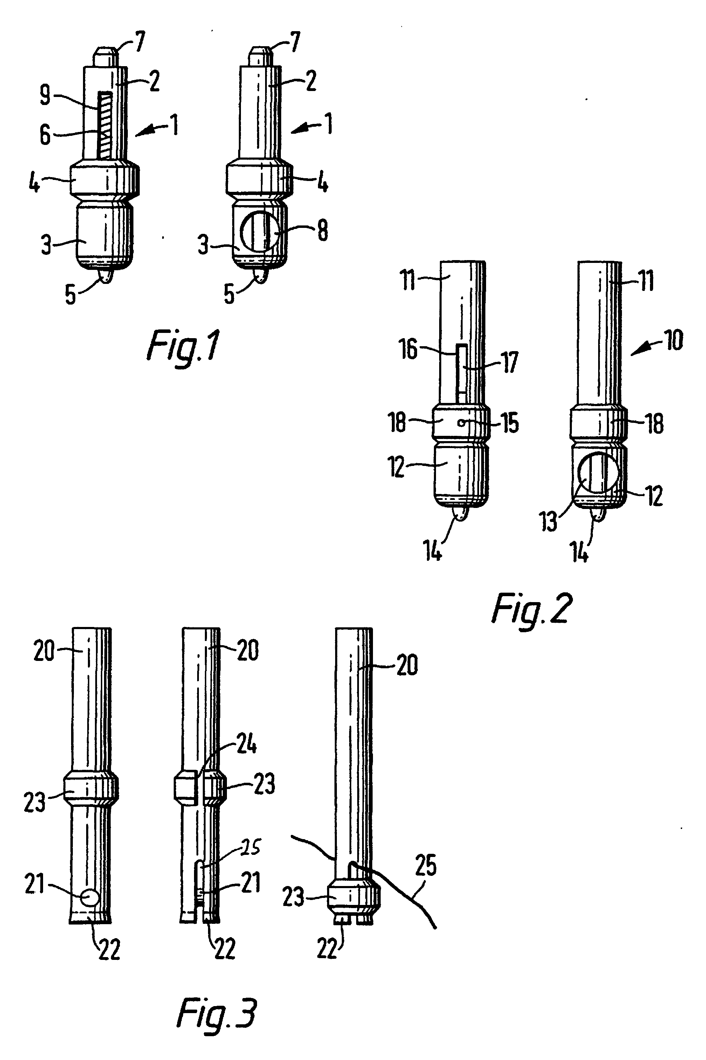

Referring now to Figure 1, there is shown an attachment device 1 comprising a body 2 having at the lower end thereof a portion 3 of enlarged diameter, and at the upper end thereof a portion 7 of reduced diameter. Portion 7 of reduced diameter may fit into a fishing float, and may be secured therein by an adhesive. A collar 4 is slidably mounted on the body 2, and is connected to the pin 5 which is slidably mounted in a bore which extends axially within the body 2. Pin 5 can be moved between the line retaining position and the line receiving position by moving collar 4. This can be done by grasping the collar 4 between the thumb and a finger.

In Figure 1, the pin 5 is shown in a line retaining position. Moving the collar 4 away from the portion 3 of enlarged diameter moves pin 5 into a line receiving position. To attach the device to a line, the pin 5 is moved into the line receiving position and a loop of the line is passed into the bore 8. The operator then allows the collar 4 to return to its line retaining position. The line then passes behind the pin 5, and out of the bore 8. As can be seen, the pin 5 protrudes through an aperture in the base of the portion 3 of enlarged diameter. Alternatively, the base of portion 3 may be provided with an indent to receive the end of pin 5.

In Figure 2 there is shown another embodiment of the invention similar to that which is shown in Figure 1. The device 10 comprises a body 11 having at one end thereof a portion 12 of enlarged diameter. The portion 12 of enlarged diameter has a bore 13 therein into which a line can be passed. Within the body 10 there is a bore which extends axially within the body 10, and in which is mounted a pin 14. Pin 14 is attached to a collar 18, which surrounds the body 11, by means of a second pin 15 which passes through collar 18 and into pin 14. In the body 11, there is provided a slot 16 which allows the second pin 15, and hence pin 14, to move between the line retaining and line releasing positions. It will be seen that when the pin 14 is in the line retaining position, as shown in Figure 2, there is a space 17 between the top of pin 14 and the top of slot 16. The collar 18 can be moved upwards until the second pin 15 abuts the end of the slot 16. When the collar 15 is in this position, the pin 14 is in the line receiving position. A spring may be inserted in the space 17 to bias the pin 14 into the position shown in Figure 2. The body 11 may form part of the stem of a fishing float or depth finder.

In Figure 3 there is shown another embodiment of an attachment device according to the invention. The device comprises a tube 20 having at one end a slot 25. In the region of the slot 22, there is mounted a peg 21 which passes through apertures in the tube 20. The peg 21 is secured in the tube 20 by means of an adhesive. Alternatively, the peg and tube could be formed from a one-piece plastics moulding. A collar 23 fits around the tube 20. The collar 23 allows the device to be attached to a line, and also provides for the device to be retained on a line.

To fit the device to a line, a loop is formed therein and the tube 20 is brought onto the line so that the line passes through the slots 21. The collar 23 is then brought down to the base 22 of the tube, the line passing through slot 24, and the collar is then turned through 180 degrees and the process repeated so that the loop of line passes beneath the peg 21 and each end of the loop of line 25 pass over the upper edges of collar 24. Friction between these three points when the line 25 is taut arrests movement of the device along the line. However, when the line is slack, the device may slide freely along the line.

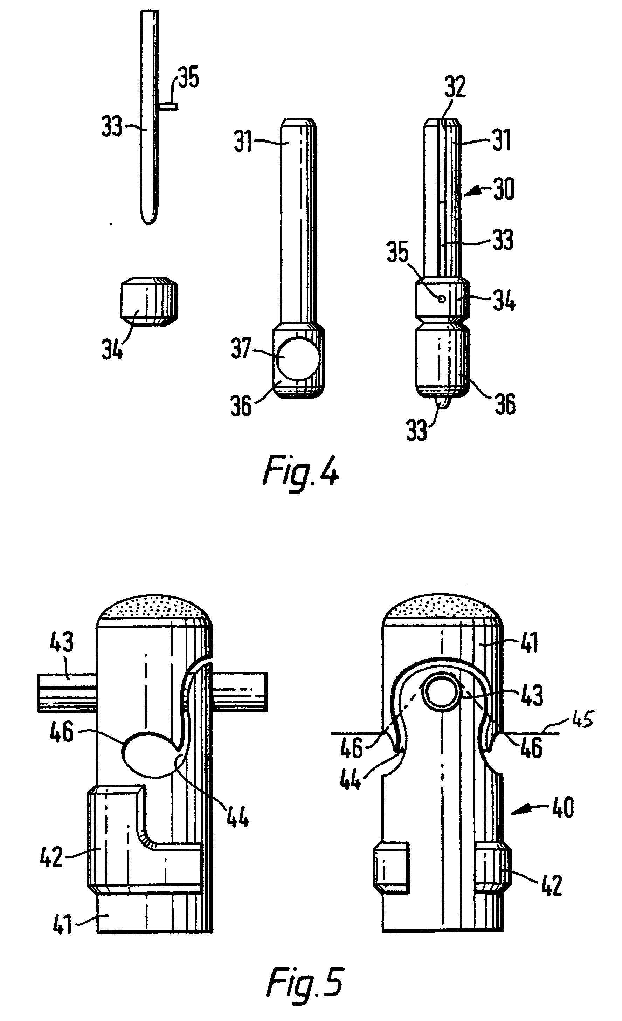

Figure 4 illustrates another attachment device according to the invention. The device 30 comprises a body 31 in the form of a tube, the body 31 having at one end thereof a portion 36 of enlarged diameter. A pin 33 is slidably mounted within the tube 31. Fixed to the pin 33 is a second pin 35. Pin 35 may be located in a bore in the pin 33. Pin 35 is provided to connect the collar 34 to the pin 33, a bore being provided in the collar 34 to receive the pin 35. When assembled, pin 35 moves up and down in the slot 32 which is provided in tube 31.

In Figure 4, the pin 33 is shown in a line retaining position. As with the embodiments shown in Figures 1 and 2, a bore 37 is provided In the portion 36 of enlarged diameter, and a loop of line is passed into the bore 37 when the pin 33 is moved out of the said bore. The user then pushes the collar, and hence pin 33 downwards into the line retaining position so the line passes behind the pin 33.

The body 31 including the portion 36 of enlarged diameter and bore 37 are preferably formed from a plastics material, and more preferably as a plastics moulding. Pin 33 Is preferably formed from a plastics material, whilst collar 34 may be a metal, and is preferably brass. The pin 35 may be made from any suitable material, such as brass or steel.

The external diameter of the pin 33 and the internal diameter of the body 31 may be such that the pin 33 is a push fit in the body 31, thereby ensuring that when the pin is in the line retaining position it remains there, and when the pin is moved to the line receiving position it remains there until the user moves the collar 34. Providing such a fit means that a biasing means to bias the pin 33 into a line retaining position is not needed.

The device 30 may be inserted into the base of a fishing float or a depth finder.

Figure 5 shows an alternative embodiment of the invention. The attachment device 40 comprises a body 41 having a slot 44. A tube or rod 43 passes through the body 41 at right angles to the axial direction of the body 41.

A loop of line 45 can be passed into the slot 44 so that opposite ends of the loop extend from the slot 44.

A collar 42 is slidably and rotatably mounted on the body 41. When the device 40 Is attached to the line, the collar 42 is rotated through approximately 180 degrees and then slid upwardly until its upper edge abuts the tube 43. In this position, the collar 42 prevents the line from escaping from the cut-away portion, and hence ensures that the device 40 remains attached to the line.

When the line is pulled taut, it engages with the upper surface of tube 43, and a point on each curved section 46 of slot 44. Friction between the line and the device 40 at these three points is sufficient to arrest movement of the device along the line.

The device 40 can form the upper or lower part of the stem of a fishing float or depth finder, or can be manufactured in such a manner to form an attachment for a fishing float or depth finder.

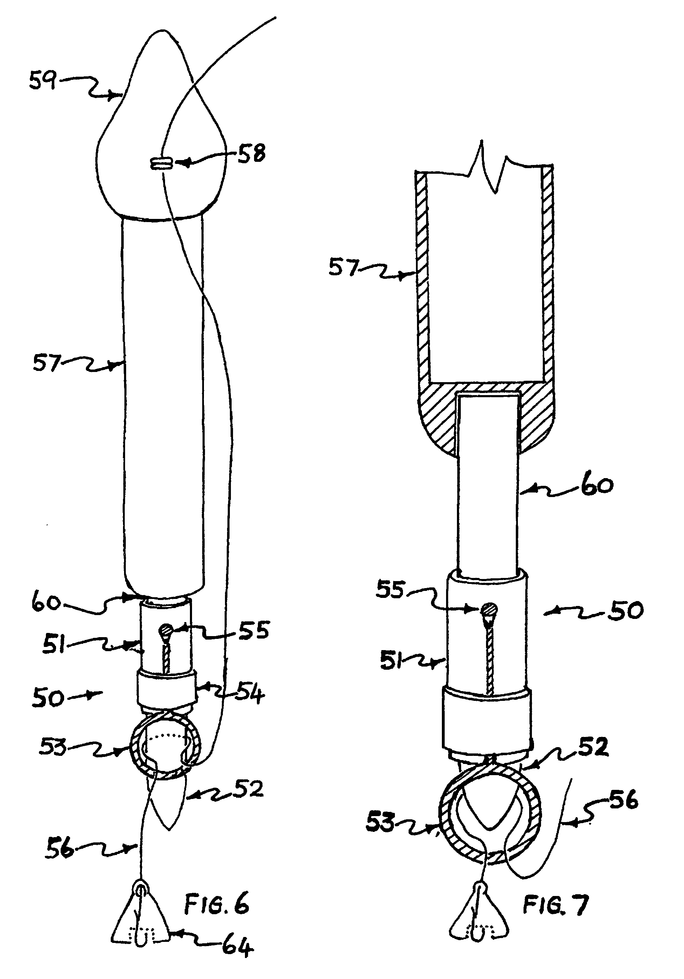

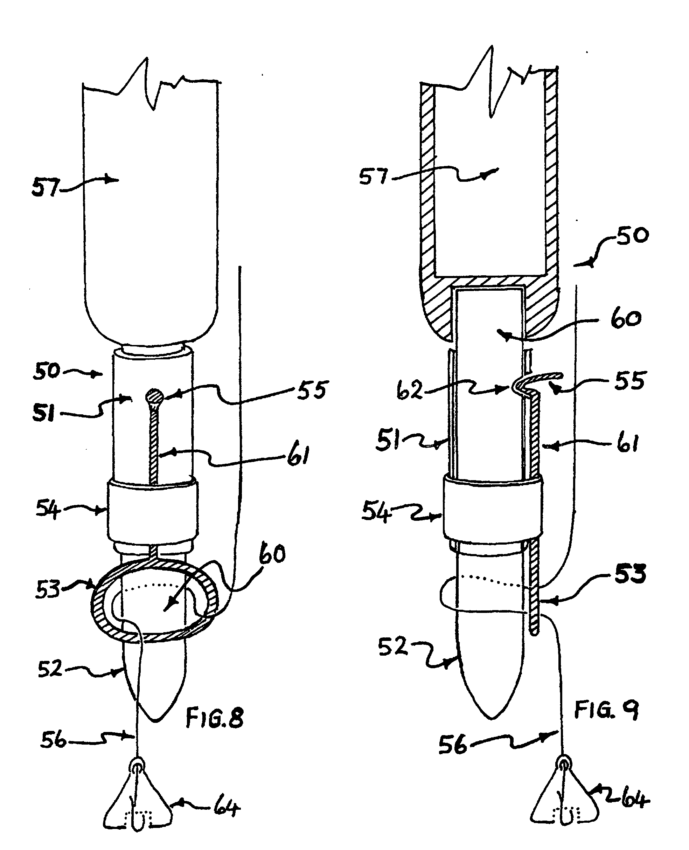

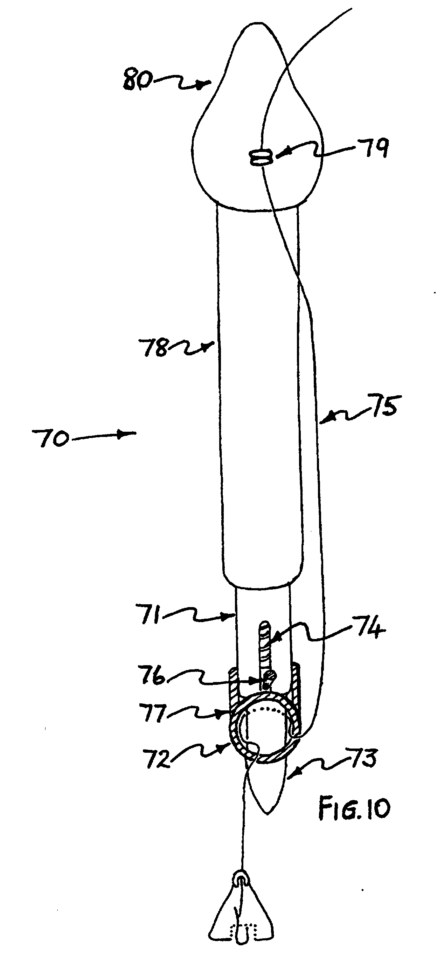

Referring now to Figures 7 to 9, there is shown a depth finder 50 according to the invention. At the lower end of the depth finder 50 there is mounted an attachment means comprising a body and a retaining member. The body comprises a tube 51 having attached thereto a wire member having a stem 61 and an eyelet 53. The wire member is attached to the tube by means of a collar 54. Alternatively, the collar 54 may be replaced by whipping. The retaining member comprises a rod 60 which is tapered 52. Rod 60 is provided with an indent 62 with which a shaped portion 55 of the stem 61 co-operates to secure the retaining member in a line retaining position, as shown in Figures 8 and 9.

To attach the depth finder 50 to a line 56, the body is simply moved downwards, and a loop of line is inserted through the eyelet 53 so that the line may pass behind the rod 60. The body is then moved upwardly until It reaches the position shown in Figures 8 and 9, and is retained in that position by virtue of the shaped portion 55 engaging with the indent 62.

As can be seen from Figures 8 and 9, when the line 56 is slack, the depth finder can slide along the line. However, when the line becomes taut friction between the line, the eyelet and the rod arrest movement of the depth finder.

In practice, to find the depth of the water being fished, the angler casts out the line 56 and the weight 64 falls to the bottom of the lake, or river. As the weight is falling, the line 56 is not under tension, so the buoyancy of the float causes it to move up the line to the surface. When the depth finder reaches the surface, the angler lifts up the rod bringing the line 56 into tension, and hence arresting movement of the float on the line.

The distance between the depth finder 50 and the weight 64 indicates the depth of the water being fished.

Referring now to Figures 10 to 14, there is shown a depth finder 70 according to the invention. At the lower end of the depth finder 70 there is mounted an attachment means comprising a body and a retaining member. The body comprises a tube 71 which is attached to the base of the float body 78 by means of a plug 83. The body further comprises an eyelet 72 formed from wire or plastics, and attached to the tube 71. Eyelet 72 has legs 77 extending therefrom which provide for attachment of the eyelet to the tube. Within the tube 71, there is slidably mounted a retaining member in the form of a rod 73, the lower end of which is tapered. Extending from the rod 73 is a pin 76 which enables the rod to be moved between the line retaining and line receiving positions. A slot is provided in the tube 71 in which the pin 76 may slide.

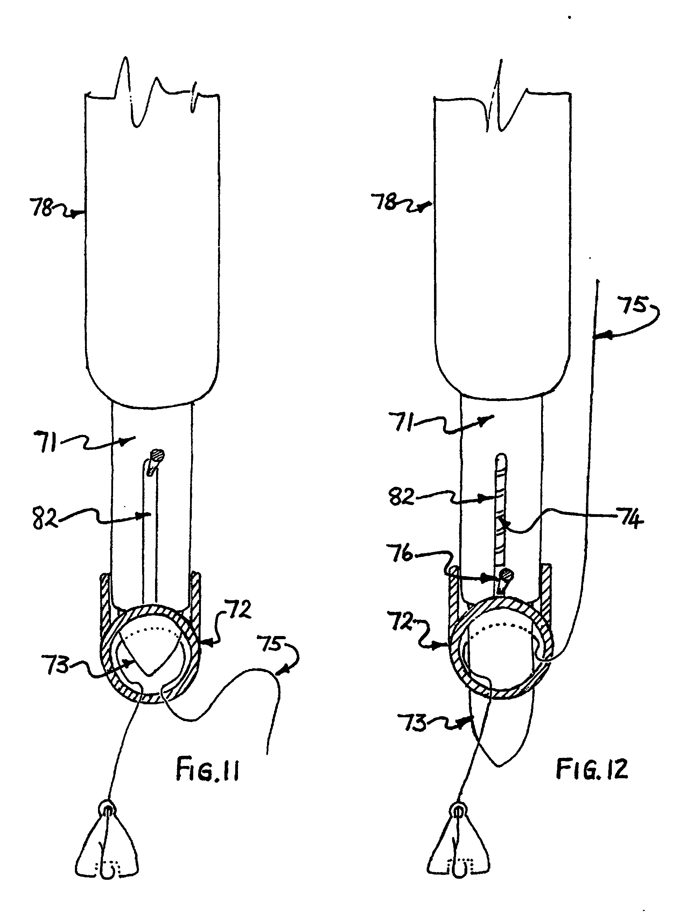

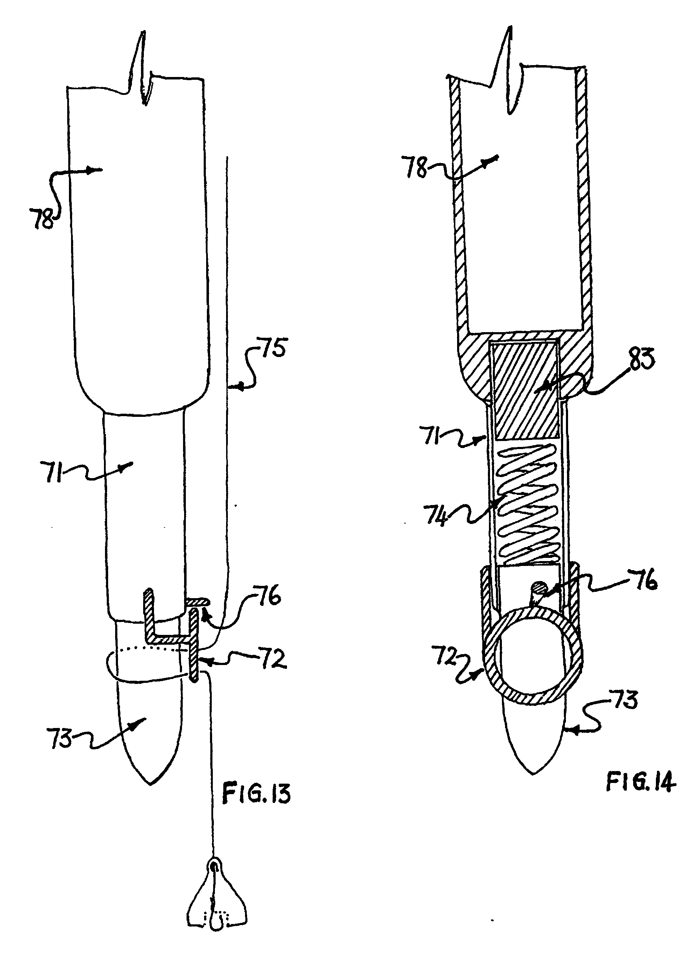

As can be seen from Figures 12 and 14, a spring 74 is mounted within the tube 71, and is arranged to bias the rod 73 into the line retaining position.

In Figure 11, the rod 73 has been moved up into the tube 71 against the force of the spring 74 to allow a loop of line 75 to be inserted through the eyelet 72. Upon releasing the pin 76, the rod automatically moves into the line retaining position shown in Figures 12 to 14 under the force of spring 74.

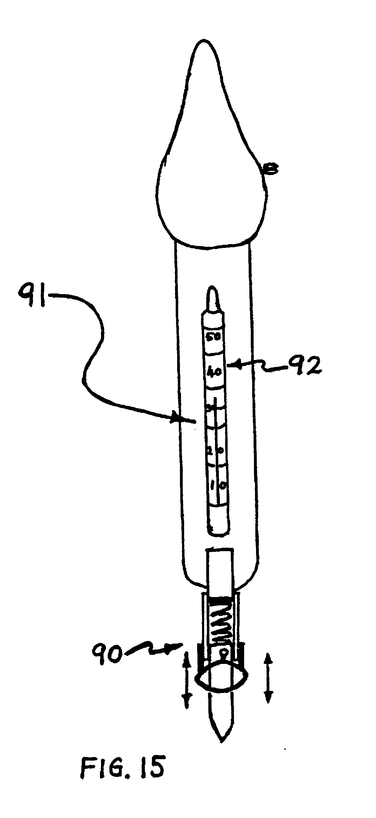

Figure 15 shows another embodiment of the invention in which a depth finder 91 having attachment means 90 is provided with a thermometer which enables the angler to assess the temperature of the water at different points In the area of water being fished. This is advantageous because the temperature of the water is an indication of the likelihood of fish congregating in a particular area.

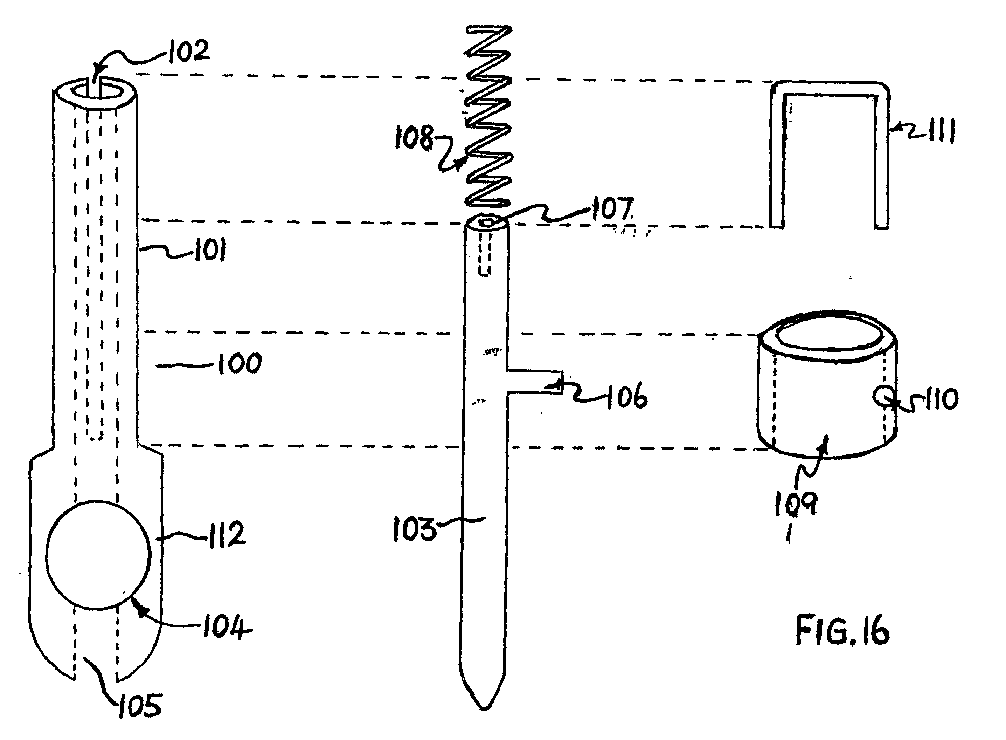

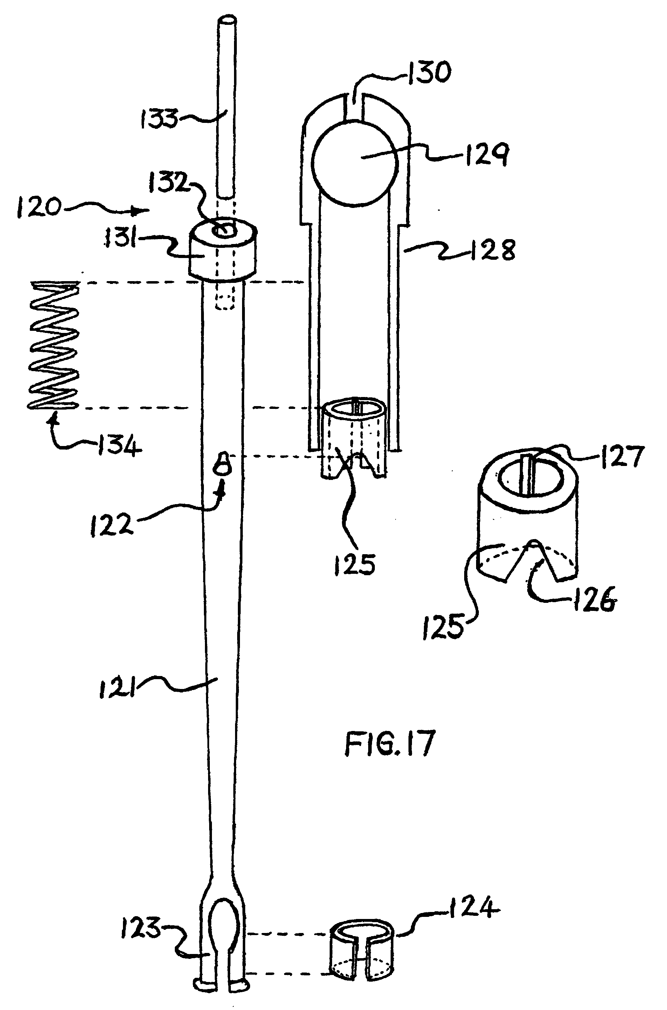

Referring now to Figure 16, there is shown an attachment device according to the invention. The device 100 comprises a body 101 in the form of a tube; the body 101 having at one end thereof a portion 112 of enlarged diameter. A pin 103 is slidably mounted in bore 105, and a second pin 106 extending from the pin 103 at a right angle thereto, slides in slot 102. When assembled, the collar 109 extends around tube 101, and the second pin 106 passes through the bore 110 in collar 109. A cap 111 is provided to fit over the top of tube 101 and to hold spring 108 and pin 103 in position. The spring 108 Is fitted in the bore 105 between the top of the pin 103 and the base of the cap 111, and functions bias the pin 103 into a line retaining position. Cap 111 may be the base of a fishing float or depth finder.
Referring now to Figure 17, pole float/depth-finder 120 having a stem 121 from which extends a peg or pin 122. At one end of the stem 121 is a line receiving component 123 around which is mounted a collar 124. At the other end of the stem there is located a collar 131 which may be an Integral part of the stem 121. The stem 121 is provided with a bore 132 which receives a tip 133 which may be of any chosen colour and may be fluorescent; a number of interchangeable tips may be provided. Body 128 fits over the collar 131, and the internal diameter thereof Is such that the body is a push fit over collar 131.

A second collar 125 is provided to retain spring 134 in position. Collar 125 is provided with a slot 127 and a "V" shaped indentation 126. The "V" shaped Indentation engages with peg or pin 122 to restrict the movement of spring 134. If peg or pin 122 protrudes sufficiently far, it may also serve to prevent body 128 sliding down the stem 121.

When assembled the tip 133 protrudes through aperture 130 in a line retaining position. To move the device into a line receiving position, the body (which may be enclosed by a buoyant member) is moved upwards until the aperture 129 is above the tip 133 so that a loop of line can be inserted Into the said aperture. The body Is then released and Is pulled downwards under the force of the spring 134 into a line retaining position. Slot 127 co-operates with a protrusion (not shown) on the stem 121 to ensure that the body does not rotate relative to the stem.

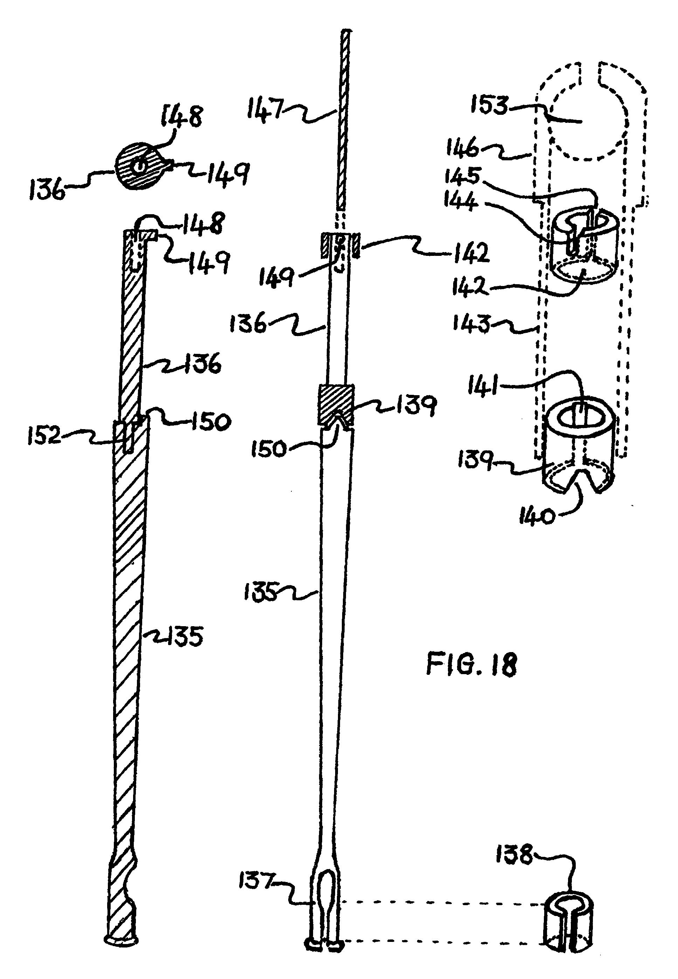

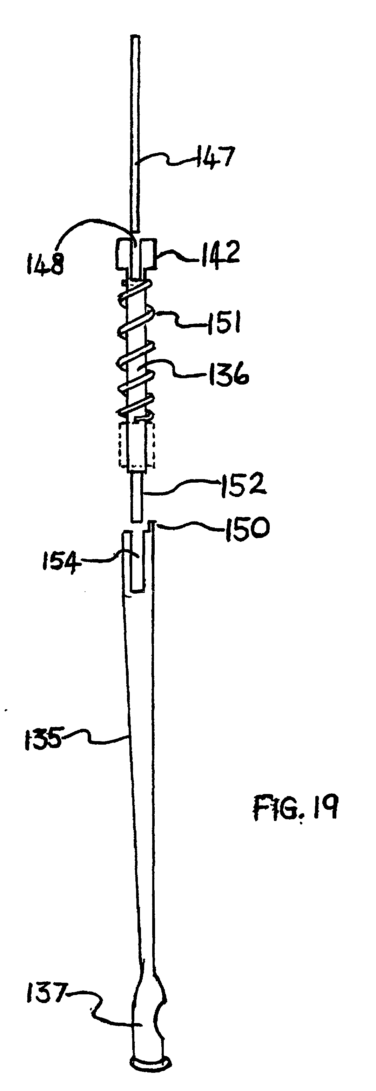

Figures 18 and 19 show the components of a pole float/depth-finder having a stem comprised of an upper part 136 having a spigot 152 which fits into the bore 154 of lower part 135. The lower part 135 is provided with a "V" shaped portion 150 which co-operates with the "V" shaped portion 140 In collar 139. The upper part 136 is provided with a protrusion (not shown) which engages with the slot 141 in the collar 139. The upper end of upper part 136 Is provided with a bore 148 into which a tip 147 may be inserted. Upper part 136 is also provided with a protrusion 149 which engages with a slot 144 in collar 142 which passes around the upper part 136. The collar 142 has a second slot 145 to enable the collar to be opened and passed over the upper part 136 of the stem. A spring is fitted between the two collars 139 and 142. Body 146 (shown in broken lines) is passed over the collar 142 and on to collar 139 with which it forms a push fit so that when the body 146 is moved upwards, the collar 139 is also moved upwards. A buoyant member may be fitted over the body 146.

A sleeve may extend downwards from the base of collar 139, and the sleeve may have internal and external diameters greater than those of the collar 139.

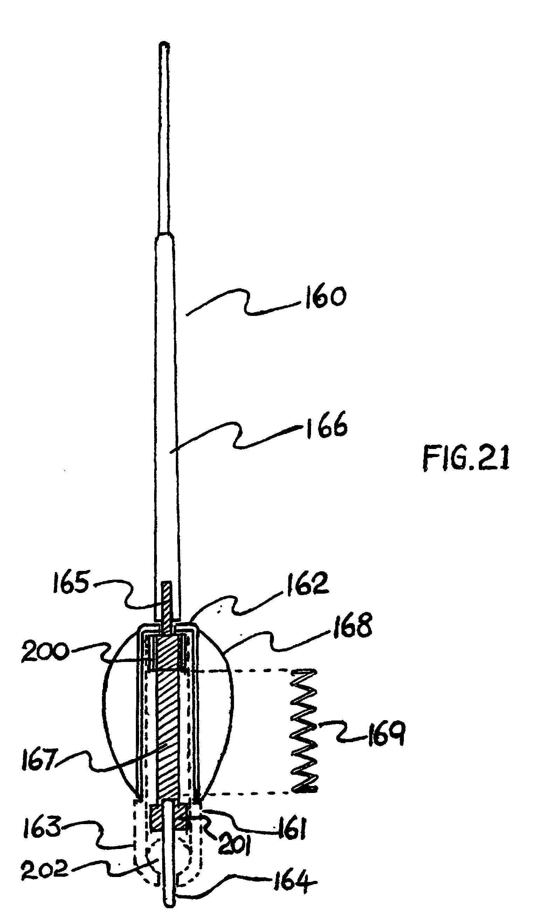

In use, the body 146 is moved upwards into a line receiving position, so that line can be passed into the bore 153, the body is then allowed to move downwards under the force of spring 151 so that the line passes behind the tip 147. The line is then passed through the slots in line receiving member 137 and collar 138. The collar 138 is then turned so that the slots are not aligned, thereby holding the line within the lower part 135 of the stem. A number of tips 147 of differing diameter may be provided, with bore 148 being adapted in the manner shown in Figure 21 to receive the said tips.

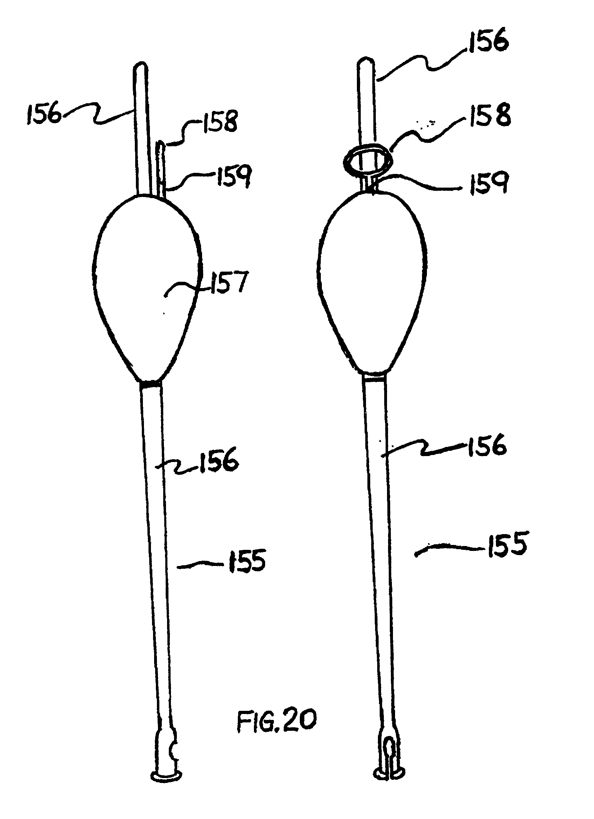

Figure 20 shows a very simple pole float according to the Invention. The float 155 comprises a stem 156 which extends through a buoyant member 157. On the buoyant member 157, there is mounted a body in the form of an eyelet 158 and a stem 159. The base of the stem 156 comprises a line receiving member which functions in the same manner as line receiving member 137. The float 155 may be modified by providing for the stem 156 to slide within the buoyant member 157, or by providing for the stem 159 to move up and down so as to provide for easier attachment of the float to the line.

To attach the pole float/depth-finder 155 to a line, a loop of line is passed through the eyelet 158, the loop being sufficiently large to allow for the line to pass over the stem 156. When the line is pulled taut, it engages with the inner edges of the eyelet 158 and a portion of the circumference of stem 156 generating sufficient friction to prevent the pole float/depth-finder from moving on the line.

Figure 21 shows a waggler float 160 which uses an attachment device 161 comprising a body 163 which is slidably mounted on a pin having upper and lower sections 167, 164. The body 163 slides within a sleeve 162 which is attached to a buoyant member 168, made from balsa wood for example. Sleeve 162, and hence buoyant member 168, are attached to the stem 166 of the float by a spigot 165 which extends from the upper section of pin 167. Body 163 is secured to collar 200 by suitable means, whereas body 163 slides on the portion 201, and spring 169 is located between the portion 201 and collar 200 to bias the pin into the line retaining position shown. In use the body 163 is pulled downwards against the force of the spring169 Into a line receiving position. A loop of line is fed into the aperture 202 and the body 163 released, thereby retaining the line. Whilst Figure 21 shows a waggler float, a similar attachment means using a sleeve may be used with other attachment devices according to the invention, for example, depth finders or pole floats.

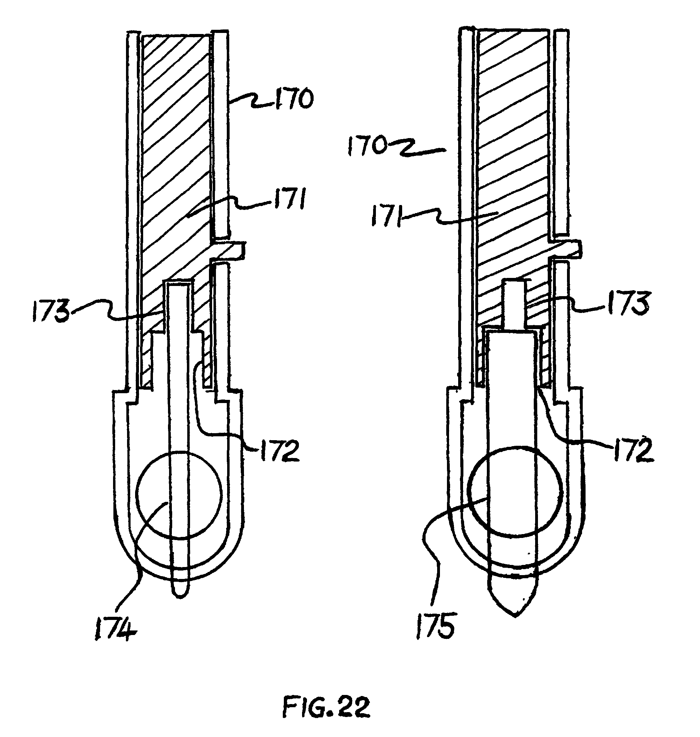

Figure 22 shows an attachment device 170 similar to that shown In Figure 16. However, the pin 171 is adapted to receive end portions 174 and 175 of different diameter. The pin 171 is provided with bores of different diameters to receive the differently sized end portions. Pin 171 may be provided with three or more bores of different diameters to receive pins of different diameters. The pins 174, 175 may be fastened in the bores 172, 173 by any suitable fastening means such as threads, or simply by being a push fit.

The advantage of providing pins of different diameters is that the attachment device can be made to suit its application. For example where a large amount of friction Is require to hold the device in position on the line, a larger diameter of pin is used, whereas where only a small amount of friction Is required, or it is known that the force applied to the line will be very large, in comparison to the weight of the float, then a pin of small diameter may be used. For example, a depth finder is usually heavier than a pole float because a depth finder is self cocking, and the only weight on the line would be the plummet, and hence pin 175 would be used. However, a pole float is relatively light weight, and hence to generate suffident friction pin 174 may be used.

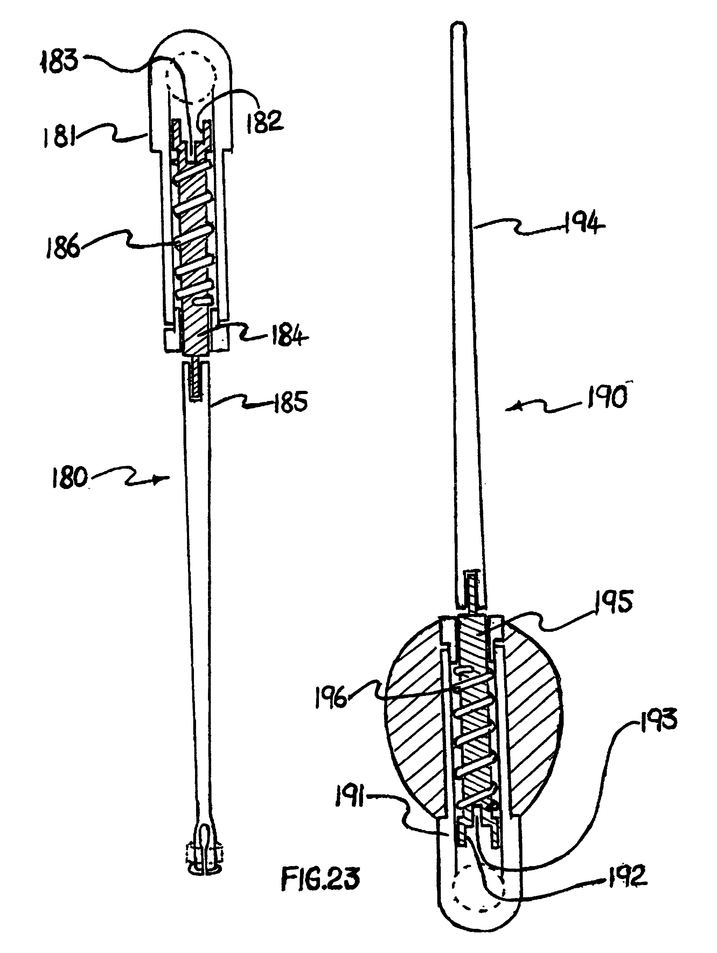

Figure 23 shows a pole float 180 and a waggler float/depth finder 190, each being provided with means to receive pins of different diameters, the said means being in the form of bores 182, 183 and 192, 193. The bodies 181, 191 move between line receiving and line retaining positions in the same manner as the device shown in Figures 18 and 19. As can be seen from Figure 23, each stem comprises two sections 184, 194 and 185, 195. Each device 180, 190 is provided with a coil spring 186, 196 to bias the body 181, 191 into the line retaining position.

## Claims

1. A device for attachment to a flexible line comprising a first part and a second part, the first part being provided with an elongate member, the second part being provided with an aperture through which a loop of the said flexible line may be passed so that the loop extends through the aperture and around the said elongate member, wherein when the device is attached to a flexible line and the said line is slack, the device may slide therealong, but when the said line is taut friction between the elongate member and the flexible line arrests movement of the device therealong, the elongate member and the second part being mounted to provide for relative sliding movement therebetween to provide a first position in which the said loop may be passed into or out of the aperture, and a second position in which the elongate member and the second part co-operate to retain the flexible line.

2. A device according to Claim 1, wherein the elongate member is slidably mounted within the first part, or the second part is slidably mounted on the elongate member, to provide said first and second positions, the device further comprising means to move the elongate member or the second part between the first and second positions.

3. A device according to Claim 2, further comprising means to hold the device in the first and/or second position.

4. A device according to Claim 3, wherein the said means to hold the device in the second position comprises biasing means to bias the elongate member into the second position.

5. A device according to any preceding claim, wherein the aperture comprises a bore, which may be a through bore, or an eyelet, through the second part.

6. A device according to any preceding claim, wherein the elongate member is a rod or a pin.

7. A device according to Claim 6, wherein the rod or pin comprises upper and lower portions releasably attachable one to another, the lower portion being chosen from a plurality of lower portions each of different diameter and/or length.

8. A fishing float and/or depth finder comprising a device for attachment to a flexible line according to any of Claims 1 to 7.

9. A fishing float and/or depth finder according to Claim 8.

## Patentansprüche

1. Eine Vorrichtung zum Befestigen an einer flexiblen Schnur, die einen ersten und einen zweiten Teil aufweist, wobei der erste Teil mit einem länglichen Element ausgestattet ist und der zweite Teil mit einer Öffnung versehen ist, durch welche eine Schlaufe der flexiblen Schnur hindurchgeführt werden kann, so dass sich die Schlaufe durch die Öffnung und um das längliche Element herum ausdehnt, wobei die Vorrichtung, wenn sie an einer flexiblen Schnur angebracht ist und diese Schnur Spielraum hat, an derselben entlang gleiten kann, jedoch in ihrer Bewegung an der Schnur entlang stehen bleibt, wenn die Schnur zwischen dem länglichen Element und der flexiblen Schnur straff gezogen wird, wobei das längliche Element und der zweite Teil so angeordnet sind, um zwischen ihnen eine relative Gleitbewegung zu ermöglichen und um somit eine erste Stellung zu liefern, in welcher die Schlaufe in die Öffnung geschoben oder aus ihr heraus gezogen werden kann, und eine zweite Stellung, in welcher das längliche Teil und das zweite Teil zusammen arbeiten, um die flexible Schnur zurück zu halten.

2. Vorrichtung nach Anspruch 1, wobei das längliche Element innerhalb des ersten Teils beweglich angebracht ist, oder der zweite Teil beweglich auf dem länglichen Element montiert ist, um die erste und zweite Stellung zu erreichen, wobei die Vorrichtung außerdem Mittel aufweist, um das längliche Element oder das zweite Teil zwischen der ersten und zweiten Stellung zu bewegen.

3. Vorrichtung nach Anspruch 2, die außerdem Mittel aufweist, um die Vorrichtung in der ersten und/oder zweiten Stellung zu halten.

4. Vorrichtung nach Anspruch 3, wobei die Mittel zum Halten der Vorrichtung in der zweiten Stellung Vorspanneinrichtungen aufweisen, um das längliche Element in die zweite Stellung zu bringen.

5. Vorrichtung nach einem der vorangegangenen Ansprüche, wobei die Öffnung eine Bohrung aufweist, die ein Durchgangsbohrung oder eine Öse durch den zweiten Teil sein kann.

6. Vorrichtung nach einem der vorangegangenen Ansprüche, wobei das längliche Element eine Rute oder Angel sein kann.

7. Vorrichtung nach Anspruch 6, wobei die Rute oder Angel obere und untere Bereiche aufweist, die frei aneinander befestigt werden können, und wobei der untere Bereich aus einer Vielzahl unterer Bereiche ausgewählt werden kann, die jeweils von unterschiedlichem Durchmesser und/oder unterschiedlicher Länge sind.

8. Angelschwimmer und/oder ein Tiefenmesser, welcher eine Vorrichtung zur Befestigung einer flexiblen Schnur nach einem der Ansprüche 1 bis 7 aufweist.

9. Angelschwimmer und/oder ein Tiefenmesser nach Anspruch 8.

## Revendications

1. Dispositif de fixation à une ligne flexible, comprenant une première partie et une seconde partie, la première partie étant munie d'un élément allongé, la seconde partie étant munie d'une ouverture à travers laquelle une boucle de ladite ligne flexible peut être passée de telle sorte que la boucle s'étende à travers l'ouverture et autour dudit élément allongé, dans lequel, lorsque le dispositif est fixé à une ligne flexible et que ladite ligne est détendue, le dispositif peut coulisser le long de celle-ci, mais, lorsque ladite ligne est tendue, le frottement entre l'élément allongé et la ligne flexible arrête le mouvement du dispositif le long de celle-ci, l'élément allongé et la seconde partie étant montés pour assurer un mouvement de coulissement relatif entre eux afin de fournir une première position dans laquelle ladite boucle peut être passée dans ou hors de l'ouverture, et une seconde position dans laquelle l'élément allongé et la seconde partie coopèrent pour retenir la ligne flexible.

2. Dispositif selon la revendication 1, dans lequel l'élément allongé est monté de façon coulissante à l'intérieur de la première partie, ou la seconde partie est montée de façon coulissante sur l'élément allongé, pour fournir lesdites première et seconde positions, le dispositif comprend en outre un moyen pour déplacer l'élément allongé ou la seconde partie entre les première et seconde positions.

3. Dispositif selon la revendication 2, comprenant en outre un moyen pour maintenir le dispositif dans la première et/ou la seconde position.

4. Dispositif selon la revendication 3, dans lequel ledit moyen pour maintenir le dispositif dans la seconde position comprend un moyen de sollicitation pour solliciter l'élément allongé dans la seconde position.

5. Dispositif selon l'une quelconque des revendications précédentes, dans lequel l'ouverture comprend un alésage, qui peut être un trou traversant, ou un oeillet, à travers la seconde partie.

6. Dispositif selon l'une quelconque des revendications précédentes, dans lequel l'élément allongé est une tige ou une broche.

7. Dispositif selon la revendication 6, dans lequel la tige ou broche comprend des parties supérieure et inférieure, susceptibles d'être attachées de façon amovible l'une à l'autre, la partie inférieure étant choisie parmi une pluralité de parties inférieures chacune de diamètre différent et/ou de longueur différente.

8. Flotteur de pêche et/ou sondeur comprenant un dispositif de fixation à une ligne flexible, tel que défini à l'une quelconque des revendications 1 à 7.

9. Flotteur de pêche et/ou sondeur selon la revendication 8.
